# EUROPÄISCHE PATENTSCHRIFT

(11) **EP 0 519 867 B1**
(45) Veröffentlichungstag und Bekanntmachung des Hinweises auf die Patenterteilung: **23.10.1996**
(21) Anmeldenummer: 92810446.2
(22) Anmeldetag: 10.06.1992
(51) Int. Cl.: G03D 13/00, G03B 27/58, B65H 20/32

(54) **Speicher für Bandmaterial**
Storage device for web material
Magasin pour matériau en bande

(30) Priorität: 19.06.1991 EP 91810472
(43) Veröffentlichungstag der Anmeldung: 23.12.1992
(73) Patentinhaber: GRETAG IMAGING AG, CH-8105 Regensdorf (CH)
(72) Erfinder: Rosenberg, Roman, CH-8051 Zürich (CH); Schaub, Heiner, CH-5430 Wettingen (CH)
(74) Vertreter: Kleewein, Walter, Dr.

(56) Entgegenhaltungen:
- DE-A- 2 551 304
- US-A- 4 136 946
- US-A- 4 218 026
- PATENT ABSTRACTS OF JAPAN vol. 6, no. 79 (P-115)(957) 18. Mai 1982 & JP-A-57 016 441
- PATENT ABSTRACTS OF JAPAN vol. 4, no. 103 (P-20)23. Juli 1980 & JP-A-55 060 926

## Beschreibung

Die Erfindung betrifft einen Speicher für Bandmaterial und eine Anlage zur Bearbeitung von Bandmaterial sowie eine fotografische Verarbeitungsstrecke gemäss dem Oberbegriff des jeweiligen unabhängigen Patentanspruchs.

Speicher für Bandmaterial sind heutzutage in vielen verschiedenen Ausführungen und Anwendungsgebieten im Einsatz. Ein Beispiel für ein solches Anwendungsgebiet sind fotografische Verarbeitungsstrecken, die eine Vielzahl von verschiedenen Bearbeitungsstationen umfassen. Bei einer solchen Verarbeitungsstrecke werden zunächst in einer Filmentwicklungsstation die Negativfilme entwickelt. In einer sich anschliessenden Kopierstation, dem sogenannten "Printer", werden anschliessend die Negativfilme auf eine lichtempfindliche fotografische Papierbahn kopiert. An die Kopierstation schliesst sich eine Papierentwicklungsstation an, der sogenannte "Nassteil", in welchem das belichtete Papier einer chemischen Nassbehandlung unterzogen und somit "entwickelt" wird. Schliesslich wird in einer nachfolgenden Endverarbeitungsstation die entwickelte Papierbahn in einzelne Papierbilder geschnitten und sortiert. Die Negativfilme werden in Streifen geschnitten und anschliessend die zu einem Auftrag gehörenden Bestandteile (Negativfilme, Papierbilder) in eine Innentasche verpackt. Die Innentasche wird in die zugehörige Auftragstasche gepackt, die dann an den Kunden bzw. die Auftragvermittlungsstelle zurückgeht.

Eine derartige fotografische Verarbeitungstrecke ist beispielsweise in US-A-4,782,354 beschrieben. Da in solchen Verarbeitungsstrecken die einzelnen Bearbeitungsstationen üblicherweise unabhängig voneinander arbeiten, und auch die Arbeitsgeschwindigkeit der einzelnen Stationen aufgrund unterschiedlicher Einflüsse variieren kann, sind zwischen die einzelnen Bearbeitungsstationen Pufferspeicher geschaltet, die zu bearbeitendes Bandmaterial zwischenspeichern und somit Schwankungen der Bearbeitungsgeschwindigkeit auffangen können. Beispielsweise kann die Belichtung der lichtempfindlichen Papierbahnen im Printer zeitweise schneller voranschreiten als der Nassteil die belichteten Papierbahnen verarbeitet. Wäre nun kein Zwischenspeicher zwischen diesen beiden Stationen vorgesehen, so müsste der Printer solange stillstehen, bis der Nassteil wieder Papier verarbeiten kann. Andererseits, wenn die Belichtung der Papierbahnen im Printer zeitweise langsamer erfolgt als der Nassteil die belichteten Papierbahnen verarbeitet, so müsste der Nassteil stillstehen, bis wieder belichtetes Papier aus dem Printer nachgeführt wird. Das muss aber unter allen Umständen vermieden werden, da die Zeit, die das Papier im Nassteil den Chemikalien ausgesetzt ist, für das Papier stets gleich lang sein muss, da sonst die Bilder zerstört werden können.

Eine Möglichkeit, wie ein solcher Zwischenspeicher zur Vermeidung solcher Probleme ausgestaltet sein kann, ist ebenfalls in der US-A-4,782,354 beschrieben. Der dort beschriebene Speicher umfasst einen Rahmen, an dem in einer ersten Ebene eine erste Halteplattform ortsfest befestigt ist Weiterhin ist an dem Rahmen in einer zweiten Ebene noch eine zweite Halteplattform vorgesehen. Die Ebene der zweiten Halteplattform erstreckt sich parallel zur Ebene der ersten Plattform. Im Unterschied zur ersten Halteplattform ist aber die zweite Halteplattform gleitend bewegbar, und zwar derart, dass sie stets parallel zur ersten Halteplattform bleibend entweder auf diese zu oder von dieser weg bewegbar ist.

Mit jeder Halteplattform ist eine Vielzahl von Rollen verbunden, wobei die Drehachsen der Rollen sich parallel zur Ebene der jeweiligen Halteplattform erstrecken. Ueber diese Rollen ist das Papier serpentinenartig geführt. Damit nun einerseits eine sichere, gespannte Führung des Bandmaterials über die Rollen gewährleistet ist, vor allem aber um die bereits weiter oben erwähnten Schwankungen der Arbeitsgeschwindigkeit von aufeinanderfolgenden Stationen auffangen zu können, sind Rückstellfedern vorgesehen, welche die bewegbare Halteplattform samt den an ihr befestigten Rollen bei einer Aenderung der Arbeitsbeschwindigkeit einer Station je nach Art der Aenderung (Beschleunigung oder Verlangsamung) auf die ortsfest angeordnete Halteplattform zu oder von ihr weg bewegen, so dass das Bandmaterial zu jedem Zeitpunkt gespannt und sicher durch den Speicher geführt ist und andererseits keine der Stationen stillstehen muss, um diese Schwankungen der Arbeitsgeschwindigkeit aufzufangen.

Ein solcher Speicher ist in mehrerer Hinsicht nachteilig. Erstens ist das "Innenleben" des Speichers aufwendig, was einen grossen Herstellungsaufwand und auch grosse Kosten für einen solchen Speicher bedeutet Weiterhin ist das Einfädeln des Bandmaterials sehr schwierig und mit erheblichem Aufwand verbunden, gerade wegen des komplizierten "Innenlebens" des Speichers. Will man vermeiden, dass nach einem Stillstand der Strecke (z.B. über Nacht) das zu bearbeitende Bandmaterial erneut eingefädelt werden muss, was den bereits angesprochenen grossen Aufwand zur Folge hat, so muss ein sogenanntes "Blindband" zumindest so lange durch die Strecke laufen, bis das Blindband durch alle Speicher hindurch eingefädelt ist, um ein erneutes Einfädeln des zu bearbeitenden Bandmaterials bei Wiederaufnahme des Betriebs vermeiden zu können (es wird bei der Wiederaufnahme des Betriebes an die Blindbänder angehängt). Die Strecke muss jedoch beim Beenden des Betriebs (z.B. abends, wenn die Strecke über Nacht stillstehen soll) zumindest so lange weiter betrieben werden, bis das Blindband vollständig durch alle Speicher hindurch eingefädelt ist, was mit zeitlichem Aufwand verbunden ist Ein ganz wesentlicher Nachteil eines solchen Speichers ist sein enormer Platzbedarf bei vergleichsweise geringer Aufnahmekapazität, der gerade dann, wenn die Aufnahmekapazität für Bandmaterial sehr gross sein soll, extrem sperrig ist und viel Raum verbraucht. Er stellt damit grosse Platzanforderungen an den Raum, in dem eine solche Verarbeitungsungsstrecke untergebracht werden soll, was im Zuge der Entwicklung von platzsparenden Verarbeitungsstrecken besonders nachteilig ist Ein weiterer Speicher mit ähnlich gearteten Nachteilen ist aus der US-A-4,930,672 beschrieben.

Ein anderer Speicher ist in der JP-A-55 060 926 beschrieben. Der dort beschriebene Speicher weist in seinem Gehäuseinnenraum eine um eine Achse herum schwenkbare Auflagefläche auf. Das in den Innenraum des Gehäuses gelangte Bandmaterial wird zunächst im Gehäuseinnenraum oberhalb dieser Auflagefläche angesammelt, solange das Gewicht des in den Innenraum gesammelten Bandmaterials kleiner ist als ein Schwellenwert. Wird dieser Schwellenwert überschritten, so wird die Auflagefläche um die Achse herum nach unten weggeschwenkt und das oberhalb der Auflagefläche angesammelte Bandmaterial wird nach unten hin freigeben.

Es ist daher eine Aufgabe der Erfindung, einen derartigen Speicher für Bandmaterial dahingehend zu verbessern, dass er gleichzeitig eine sehr hohe Aufnahmekapazität aufweist Ausserdem soll der Aufwand für den Speicher möglichst gering sein (einfaches "Innenleben"). Weiterhin ist es wünschenswert, dass das Einfädeln des Bandmaterials in den Speicher auf einfache Weise möglich ist.

Diese Aufgabe wird gemäss der Erfindung durch einen Speicher gelöst, wie er im Patentanspruch 1 charakterisiert ist Die Haltemittel sind gemäss diesem Patentanspruch so ausgebildet und angeordnet, dass sie mehrere in der Gebrauchslage untereinander liegende Niveaus definieren, auf denen sie das Bandmaterial ansammeln, bis das Gewicht des Bandmaterials den Schwellenwert für das jeweilige Niveau überschreitet Dann geben sie Bandmaterial auf das darunterliegende Niveau frei. Die Haltemittel dieses darunterliegenden Niveaus sammeln dann wieder das vom darüberliegenden Niveau freigegebene Bandmaterial bis zum Ueberschreiten des Schwellenwerts an, und so weiter.

Um zu vermeiden, dass es insbesondere im Falle von belichtetem Fotopapier als Bandmaterial beim Austreten zu Druckbelichtungen oder zu einem Verkratzen der Oberflächen (Bildflächen) kommt, weil das Gewicht des auf der untersten Papierbahn aufliegenden übrigen Fotopapiers zu gross ist, ist der Schwellenwert beim untersten Halteniveau für das Gewicht des Bandmaterials so eingestellt, dass sich unterhalb dieses untersten Haltenivaus in der Regel nur eine Längsbahn bzw. eine Schlaufe des Bandmaterials befindet.

In einer Ausgestaltung des erfindungsgemässen Speichers umfassen die Halteniveaus mehrere in der Gebrauchslage im wesentlichen waagerecht angeordnete Zeilen von Halteelementen, die die Halteniveaus definieren.

In einer anderen Ausgestaltung des erfindungsgemässen Speichers umfassen die Haltemittel mehrere in Zeilen angeordnete und in der Gebrauchslage vom einen Zeilenende bis zur Zeilenmitte hin ansteigend angeordnete und anschliessend zum anderen Zeilenende hin wieder abfallend angeordnete Halteelemente, die die Halteniveaus definieren.

Diese Haltemittel umfassen in einem Ausführungsbeispiel federnd gelagerte Halteelemente, die die Seitenkanten des Bandmaterials tragen und es oberhalb der Halteelemente ansammeln, solange das Gewicht des Bandmaterials kleiner ist als der Schwellenwert. Diese Halteelemente sind durch das Gewicht des Bandmaterials gegen die Federkraft so weit seitlich zurückdrückbar, dass sie beim Ueberschreiten des Schwellenwerts Bandmaterial nach unten hin freigeben.

Beispielsweise können die einzelnen Halteelemente jeweils eine blattfederartige biegsame Trägerplatte umfassen, an der ein Haltepilz zum Tragen des Bandmaterials vorgesehen ist. Der Kopf eines solchen Haltepilzes kann dabei kugelkalottenförmig ausgebildet sein, wobei der Kugelradius im Bereich von etwa 5 mm bis etwa 150 mm, vorzugsweise von etwa 50 mm bis etwa 100 mm liegt.

Um die "Vorspannung" einer solchen Trägerplatte einstellen zu können, und damit auch den Schwellenwert für das Gewicht des Bandmaterials, ist in einer Ausgestaltung des Speichers ein Anschlag für die biegsame Trägerplatte vorgesehen, gegen die das eine Ende der Trägerplatte unter Biegespannung anstösst. Gleichzeitig ist am anderen Ende, also zwischen der Trägerplatte und ihrer Befestigung, ein Abstandshalter vorgesehen. So kann auf einfache Weise die "Vorspannung" der Trägerplatte eingestellt werden.

Soll der Speicher Bandmaterial von unterschiedlicher Breite verarbeiten können, so muss die effektive Breite des Speicherinnenraums variierbar sein. Um dies zu ermöglichen, sind in einer Ausgestaltung des erfindungsgemässen Speichers Begrenzungseinrichtungen vorgesehen, die zwei im wesentlichen ebene Flächen beschreiben. Diese Flächen erstrecken sich etwa parallel zu den Seitenwänden des Gehäuses und legen so die effektive Breite des Speicherinnenraums, in den das Bandmaterial eintritt, fest. An einer der Begrenzungseinrichtungen sind Halteelemente zum Ansammeln des eingetretenen Bandmaterials vorgesehen. Damit nun die effektive Breite des Speicherinnenraums variierbar ist, sind die Begrenzungseinrichtungen aufeinander zu oder voneinander weg bewegbar.

Bei einer Ausgestaltung des erfindungsgemässen Speichers umfasst eine der Begrenzungseinrichtungen einen Rahmen , der im wesentlichen parallel zur Bewegungsrichtung des eintretenden Bandmaterials angeordnete Verstrebungen aufweist, an denen die biegsamen Trägerplatten, die die Haltepilze tragen, befestigt sind.

Ist ein solcher Speicher fest über ortsfeste Schnittstellen mit der vorangehenden und der nachfolgenden Bearbeitungsstation verbunden, und muss nun die effektive Breite des Speicherinnenraums verändert werden, weil beispielsweise aus der vorangehenden Bearbeitungsstation nun ein Bandmaterial kleinerer oder grösserer Breite als vorher in den Speicher eintritt, so muss die effektive Breite des Speicherinnenraums ohne grossen Aufwand variierbar sein. Um gleichzeitig noch die ortsfesten Schnittstellen zu berücksichtigen, sind die Begrenzungseinrichtungen gemeinsam und symmetrisch zu einer Referenzebene bewegbar, die sich senkrecht zur Ebene des eintretenden Bandmaterials und parallel zu dessen Seitenkanten vom Einlass zum Auslass erstreckt.

Bei einer praktischen Ausgestaltung des erfindungsgemässen Speichers ist zu diesem Zweck zum Bewegen der Begrenzungseinrichtungen mindestens eine motorisch antreibbare Schraubenspindel vorgesehen, welche von ihrer Längsmitte aus betrachtet zum einen Spindelende hin mit einem Rechtsgewinde und zum anderen Spindelende hin mit einem Linksgewinde von etwa gleicher Gewindesteilheit versehen ist. Diese Schraubenspindel greift in eine in der jeweiligen Begrenzungseinrichtung vorgesehene Gewindebohrung ein.

Auch das Einfädeln des Bandmaterials in den Speicher soll einfach, schnell und zuverlässig möglich sein. Zu diesem Zweck ist der Speicher mit einem Einfädelmechanismus versehen, der einen Kanal vom Einlass in den Speicherinnenraum zum Auslass aus dem Speicherinnenraum definiert.

Eine Ausgestaltung dieses Einfädelmechanismus' umfasst schwenkbare Leitbleche, die im eingeschwenkten Zustand den Kanal vom Einlass in den Speicherinnenraum zum Auslass aus dem Speicherinnenraum definieren. Um dieses Einfädeln möglichst vollautomatisch und zuverlässig durchführen zu können, ist am Einlass und am Auslass jeweils ein Sensor vorgesehen, wobei der Sensor am Einlass beim Detektieren von eintretendem Bandmaterial ein Signal zum Einschwenken der Leitbleche an einen Antrieb zum Ein- und Ausschwenken der Leitbleche gibt. Ist das Bandmaterial eingefädelt und tritt am Auslass wieder aus, so gibt der Sensor am Auslass ein Signal zum Ausschwenken der Leitbleche an den Antrieb.

Damit das Bandmaterial im Speicher transportiert werden kann, sind am Einlass in den Speicher bzw. auch am Auslass aus dem Speicher beispielsweise Transportrollen vorgesehen. Im Kontakt mit solchen Rollen kommt es aber öfter vor, dass sich das Bandmaterial elektrostatisch auflädt. Kommt es dann im Speicherinnenraum zu ungewollten Entladungen, so kann dabei unter Umständen Bandmaterial ungewollt belichtet oder anderweitig beschädigt werden. Um dies zu vermeiden, ist bei einer Ausgestaltung des erfindungsgemässen Speichers sowohl am Einlass als auch am Auslass eine Ableiteinrichtung vorgesehen, welche auf dem Bandmaterial befindliche elektrische Ladungen ableitet.

Eine weitere Ausgestaltung des erfindungsgemässen Speichers umfasst noch einen Füllstandsanzeiger, der die Zufuhr von Bandmaterial in den Innenraum des Speichers stoppt, wenn die im Innenraum befindliche Menge an Bandmaterial einen Schwellenwert überschreitet.

Besonders praktisch ist ein solcher Speicher in einer Anlage zur Bearbeitung von Bandmaterial, die mindestens zwei Bearbeitungsstationen umfasst, wobei zwischen die Bearbeitungsstationen ein derartiger Speicher geschaltet ist.

Für den Einsatz in fotografischen Verarbeitungsstrecken ist ein derartiger Speicher besonders geeignet. Dementsprechend ist ein weiterer Gegenstand der Erfindung eine mit einem erfindungsgemässen Speicher ausgestattete fotografische Verarbeitungsstrecke mit einem oder mehreren solcher Speicher. In einer solchen Verarbeitungsstrecke werden zunächst in einer Filmentwicklungsstation die Positiv- oder Negativfilme entwickelt. Anschliessend werden in einer Kopiersstation die Filme auf eine lichtempfindliche fotografische Papierbahn kopiert. Anschliessend wird die belichtete fotografische Papierbahn in einer Papierentwicklungsstation entwickelt, und am Ende werden in einer Endverarbeitungsstation alle zu einem Kopierauftrag gehörenden Bestandteile zusammengestellt und verpackt. In solchen fotografischen Verarbeitungsstationen ist wenigstens zwischen der Kopierstation und der Papierentwicklungsstation ein Zwischenspeicher vorgesehen, der in besonders vorteilhafter Weise wie oben beschrieben ausgebildet ist.

Im folgenden wird die Erfindung anhand der Zeichnung näher erläutert; es zeigen, teilweise in schematischer Darstellung:
- Fig. 1: einen Längsschnitt durch ein Ausführungsbeispiel des erfindungsgemässen Speichers,
- Fig. 2: einen Schnitt gemäss der Linie II-II der Fig. 1,
- Fig. 3: ein Halteelement des in Fig. 1 gezeigten Ausführungsbeispiels des Speichers,
- Fig. 4a: ein Ausführungsbeispiel des Einfädelmechanismus' mit schwenkbaren Leitblechen, im ausgeschwenkten Zustand,
- Fig. 4b: den Einfädelmechanismus der Fig. 4a mit den Leitblechen, im eingeschwenkten Zustand,
- Fig.5-7: einen Längsschnitt durch das Ausführungsbeispiel der Fig. 1 in verschiedenen Betriebszuständen,
- Fig. 8: einen Längsschnitt durch ein weiteres Ausführungsbeispiel des erfindungsgemässen Speichers, und
- Fig. 9: eine fotografische Verarbeitungsstrecke mit mehreren erfindungsgemässen Speichern

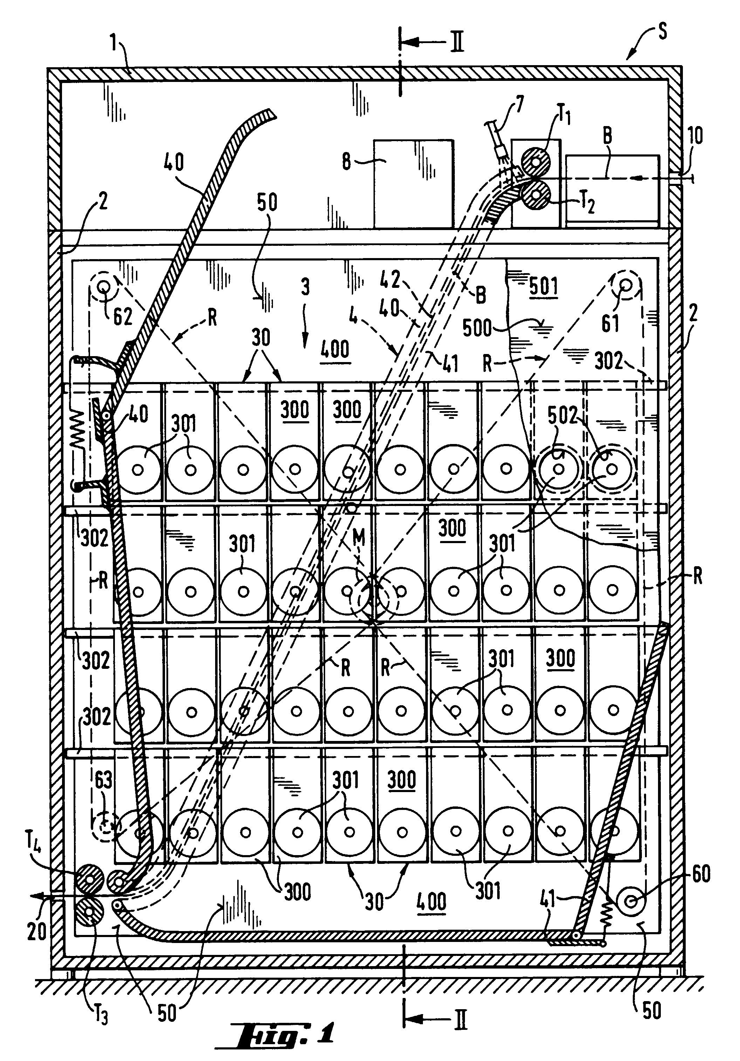

In dem in Fig. 1 gezeigten Längsschnitt durch ein Ausführungsbeispiel des erfindungsgemässen Speichers S erkennt man ein von einem Oberteil 1 und einem Unterteil 2 gebildetes Speichergehäuse. Im Oberteil 1 des Gehäuses ist ein Einlass 10 vorgesehen, durch den hindurch Bandmaterial B in den Gehäuseinnenraum gelangen kann, im Unterteil 2 entsprechend ein Auslass 20, durch den hindurch es wieder aus dem Gehäuseinnenraum heraus gelangen kann. Weiterhin sind Haltemittel 3 vorgesehen, die bei diesem Ausführungsbeispiel viele einzelne Halteelemente 30 umfassen, welche im Detail weiter unten noch erläutert werden. Zugunsten einer besseren Übersichtlichkeit ist die weiter unten beschriebene Kulissenplatte 501 hier weggelassen worden. Ausserdem erkennt man noch Transportrollen T₁ und T₂ am Einlass 10 bzw. T₃ und T₄ am Auslass 20, die jeweils zum Transport des Bandmaterials B dienen, sowie einen Einfädelmechanismus 4 zum Einfädeln des Bandmaterials B.

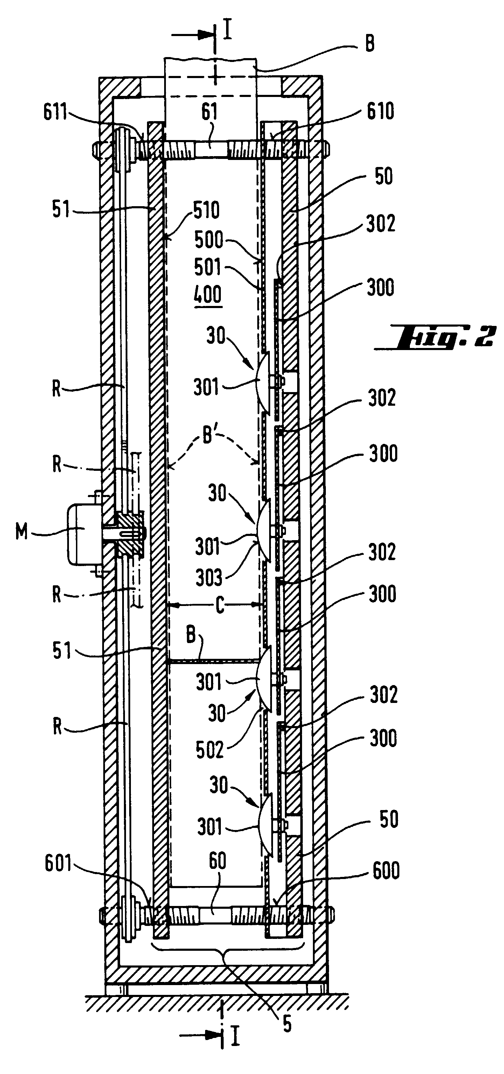

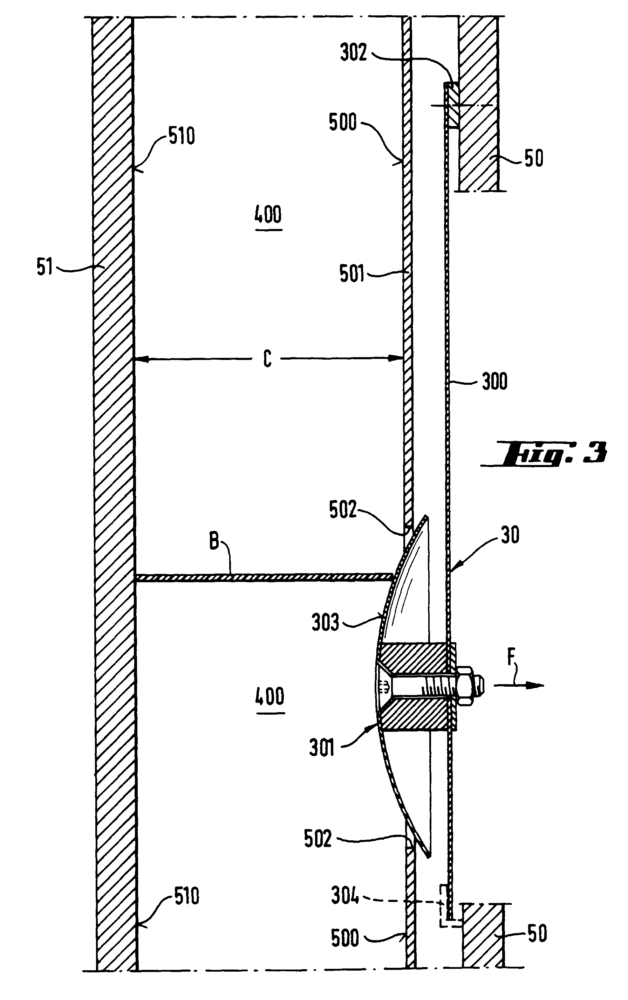

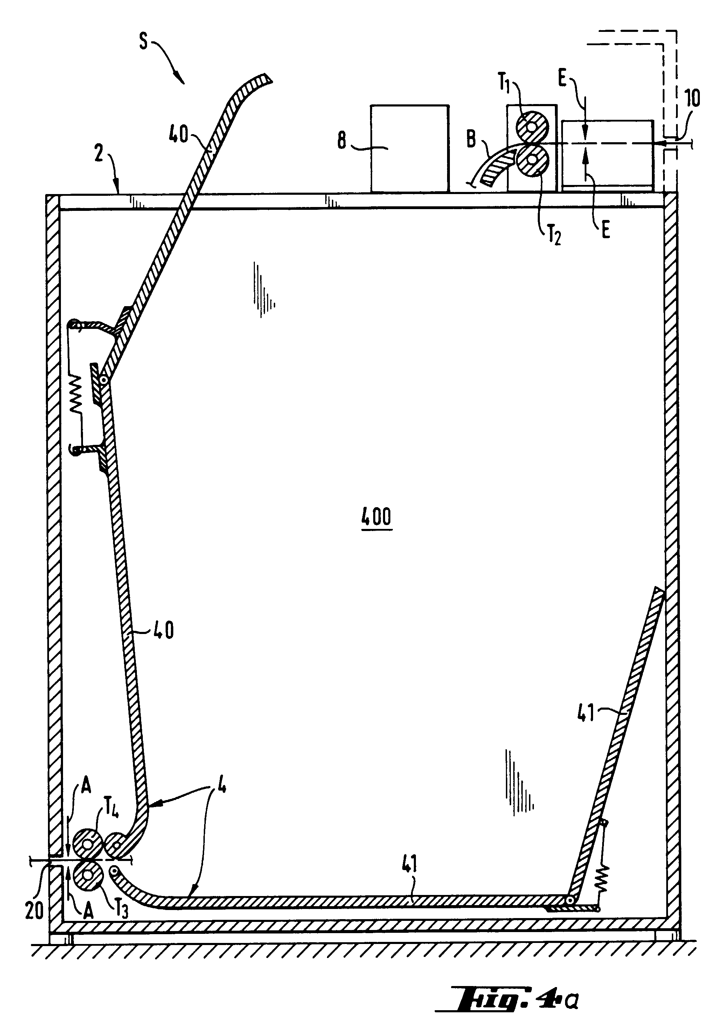

Fig. 2 zeigt einen Schnitt durch den Speicher S längs der Linie II-II der Fig. 1. Bei dieser Ansicht wurde aus zeichnerischen Gründen auf das Oberteil 1 des Gehäuses verzichtet, wie auch noch auf einige andere Details, da diese Figur zur Erläuterung der wesentlichen Wirkungsweise der Haltemittel 3 (Fig. 1) bzw. zur Erläuterung von Begrenzungseinrichtungen 5 dienen soll, die die effektive Breite des Speicherinnenraums festlegen. Wie bereits weiter oben erwähnt, umfassen die Haltemittel viele einzelne Halteelemente 30, welche bei diesem Ausführungsbeispiel jeweils eine blattfederartige biegsame Trägerplatte 300 umfassen, an der ein Haltepilz 301 vorgesehen ist. Die einzelnen Trägerplatten 300 sind jeweils über einen Abstandshalter 302 (Fig. 3) mit einer ersten Platte 50 derart verbunden, dass die Haltepilze 301 auf eine zweite Platte 51 zuweisen. Durch die innere Fläche 500 einer der ersten Platte 50 vorgelagerten Kulissenplatte 501 und durch die Fläche 510 der zweiten Platte 51 bzw. durch die Haltepilze 301 wird die effektive Breite des Speicherinnenraums und damit auch des zu verarbeitenden Bandmaterials B (Fig. 1) festgelegt. Dabei sind in der Kulissenplatte 501 Oeffnungen 502 vorgesehen, deren Durchmesser kleiner ist als der Durchmesser der Haltepilze 301, so dass diese durch die Kulissenplatte 501 hindurch in den Innenraum hineinragen können und zusammen mit der Platte 501 die effektive Breite C des Speicherinnenraums festlegen. Um dies deutlich hervorzuheben, sind in Fig. 2 die gestrichelten Linien B' angedeutet, die auch verdeutlichen sollen, dass die eine Kante des Bandmaterials B an der Innenfläche 510 der zweiten Platte 51 anliegt und die andere Kante durch die Haltepilze 301 getragen wird Der Fachmann erkennt sofort, dass die erste Platte 50 auch als Rahmen ausgebildet sein kann, der mit Querverstrebungen versehen ist, an denen dann über die Abstandshalter 302 die Trägerplatten 300 der Haltepilze 301 befestigt sind.

Wie in Fig. 1 und 2 zu erkennen ist, sind zum Verstellen der effektiven Breite C des Speicherinnenraums 400 Schraubenspindeln 60-63 vorgesehen, die von ihrer jeweiligen Längsmitte aus betrachtet zum einen Ende hin mit einem Linksgewinde 600 bzw. 610 und zum anderen Ende hin mit einem Rechtsgewinde 601 bzw. 611 versehen sind. In den beiden Platten 50 und 51 (ggf. in einem Rahmen) sind entsprechende Gewindebohrungen vorgesehen, in die das jeweilige Gewinde der Schraubenspindeln eingreift. Die Gewindesteigung ist jeweils gleich, so dass eine gemeinsame Verstellung der beiden Platten 50 und 51 symmetrisch zur Längs schnittebene I-I möglich ist. Ein Antrieb dieser Schraubenspindeln 60-63 kann beispielweise über einen Antriebsmotor M und einen oder mehrere Riemen R erfolgen.

Ein einzelnes Halteelement 30 ist in Fig. 3 noch einmal grösser dargestellt. Man erkennt die Trägerplatte 300, die über den Abstandshalter 302 an der ersten Platte 50 oder ggf. an einer Querverstrebung eines anstelle der Platte vorgesehenen Rahmens befestigt ist. An der Trägerplatte 300 ist der Haltepilz 301 befestigt, dessen Kopf 303 hier durch eine Kugelkalotte gebildet ist. Der Kugelradius liegt dabei im Bereich von etwa 5 mm bis etwa 150 mm, vorzugsweise liegt er im Bereich von etwa 50 mm bis etwa 100 mm. Wenn nun eine Kante des Bandmaterials B von oben auf dem Haltepilz 301 aufliegt und sich darüber Bandmaterial ansammelt, so drückt das Bandmaterial durch sein Gewicht die biegsame Trägerplatte 300 gegen die durch die Spannung der Trägerplatte gegebene Federkraft in Richtung des Pfeils F seitlich nach aussen zurück. Beim Ueberschreiten eines Schwellenwerts ist dann die Trägerplatte 300 so weit zurückgedrückt, dass Bandmaterial nach unten hin freigegeben wird.

Aus Fig. 3 ist auch ersichtlich, wie auf einfache Weise die "Vorspannung" einer solchen Trägerplatte 300 eingestellt und somit der Schwellenwert, bei dem Bandmaterial nach unten freigegeben wird, verändert werden kann. Zu diesem Zweck kann ein Anschlag 304 vorgesehen sein (fakultativ, daher nur in Fig. 3 und nur strichliert angedeutet), gegen den das dem Abstandshalter 302 abgewandte Ende der Trägerplatte 300 anstösst. Durch die Wahl der Dicke des Abstandshalters 302 kann so auf einfache Weise die "Vorspannung" und somit der Schwellenwert, bei dem Bandmaterial nach unten hin freigegeben wird, verändert werden.

Der Schwellenwert lässt sich auch durch Variation der effektiven Breite C des Speicherinnenraums 400 einstellen. Eine Verringerung der Breite C bewirkt nämlich eine Vergrösserung der seitlichen Auslenkbewegungen der Halteelemente 30 und damit der Schwellenwerte und umgekehrt. Auf diese Weise kann das unterschiedliche Gewicht verschieden breiter Papierbahnen berücksichtigt werden.

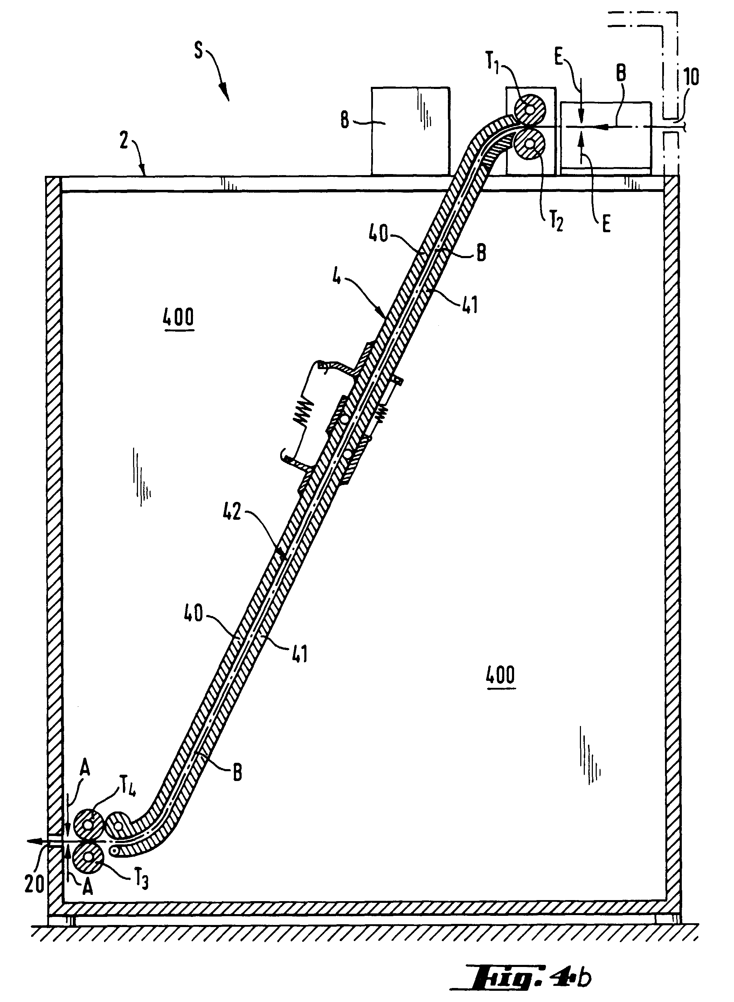

Anhand der folgenden Figuren (Fig. 4 bis Fig. 7) soll nun die Funktionsweise des Speichers S detailliert erläutert werden. Dazu werden zunächst anhand der Fig. 4 (Fig. 4a und Fig. 4b) der Einfädelmechanismus 4 und der Einfädelvorgang erläutert und daran anschliessend das eigentliche Ansammeln bzw. Speichern des Bandmaterials. Zur Erläuterung des Einfädelvorgangs wird zunächst ein Speicher im unbefüllten Zustand betrachtet. In der Darstellung in Fig. 4 ist dabei wieder aus Gründen der besseren Übersichtlichkeit auf die Darstellung des Oberteils 1 des Gehäuses und auf die Darstellung der Halteelemente 30 verzichtet worden.

In Fig. 4a sind ein zweiteiliges oberes Leitblech 40 und ein zweiteiliges unteres Leitblech 41 in der ausgeschwenkten Position dargestellt, in der sie weitestgehend an den Gehäusewänden anliegen. Beim Eintreten des Bandmaterials B in den Gehäuseinnenraum detektiert ein beispielsweise optischer Sensor das eintretende Bandmaterial B (sensorisches Detektieren des eintretenden Bandmaterials B durch die Pfeile E angedeutet). Daraufhin gibt der Sensor ein Signal an einen Antrieb (nicht dargestellt) zum Ein- und Ausschwenken der Leitbleche 40 und 41, die im eingeschwenkten Zustand in Fig. 4b dargestellt sind. In diesem Zustand definieren die Leitbleche 40 und 41 einen Kanal 42, der sich im wesentlichen vom Einlass in den Speicherinnenraum 400 bis zum Auslass aus dem Speicherinnenraum erstreckt. In diesem Kanal 42 wird das Bandmaterial B beim Einfädelvorgang bis zum Auslass 20 geführt, wo ebenfalls ein Sensor das austretende Bandmaterial B detektiert (sensorisches Detektieren des austretenden Bandmaterials durch die Pfeile A angedeutet). Der Sensor gibt daraufhin ein Signal zum Ausschwenken der Leitbleche 40 und 41 an den Antrieb zum Ein- und Ausschwenken der Leitbleche 40 und 41, wodurch diese wieder in den anhand von Fig. 4a erläuterten Zustand ausgeschwenkt werden. Der Einfädelvorgang ist dann beendet Vorteilhaft ist, dass der Einfädelvorgang einfach, schnell und zuverlässig bei vergleichsweise geringem mechanischen Aufwand durchführbar ist.

Nach Beendigung des Einfädelvorgangs kann das Bandmaterial B nun im Innenraum des Speichers S gespeichert werden. Gleichzeitig kann bei Bedarf jederzeit am Auslass 20 des Speichers S Bandmaterial beispielsweise zur Weiterverarbeitung entnommen werden, da das Bandmaterial ja eingefädelt worden ist und somit auch am Auslass 20 des Speichers S zur Verfügung steht. Der Fachmann erkennt ohne weiteres, dass der Auslass 20 selbstverständlich auch weiter oben vorgesehen sein kann (z.B. wenn eine sich an den Auslass 20 anschliessende Bearbeitungsstation ihren Einlass weiter oben aufweist), es muss dann nur das Bandmaterial zu diesem Auslass geführt sein.

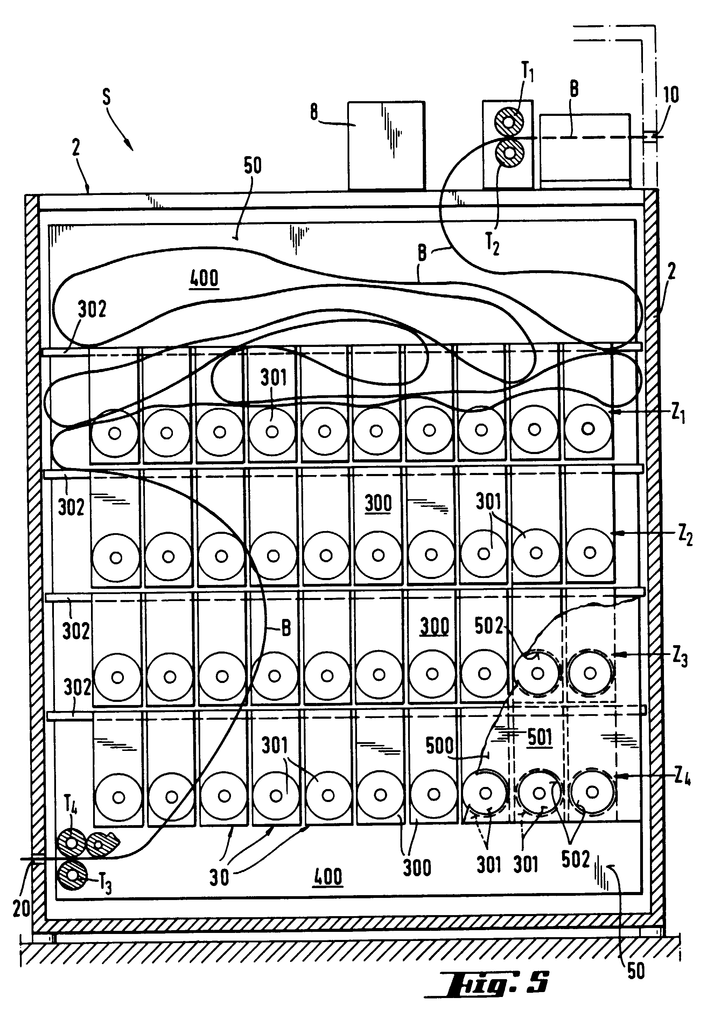

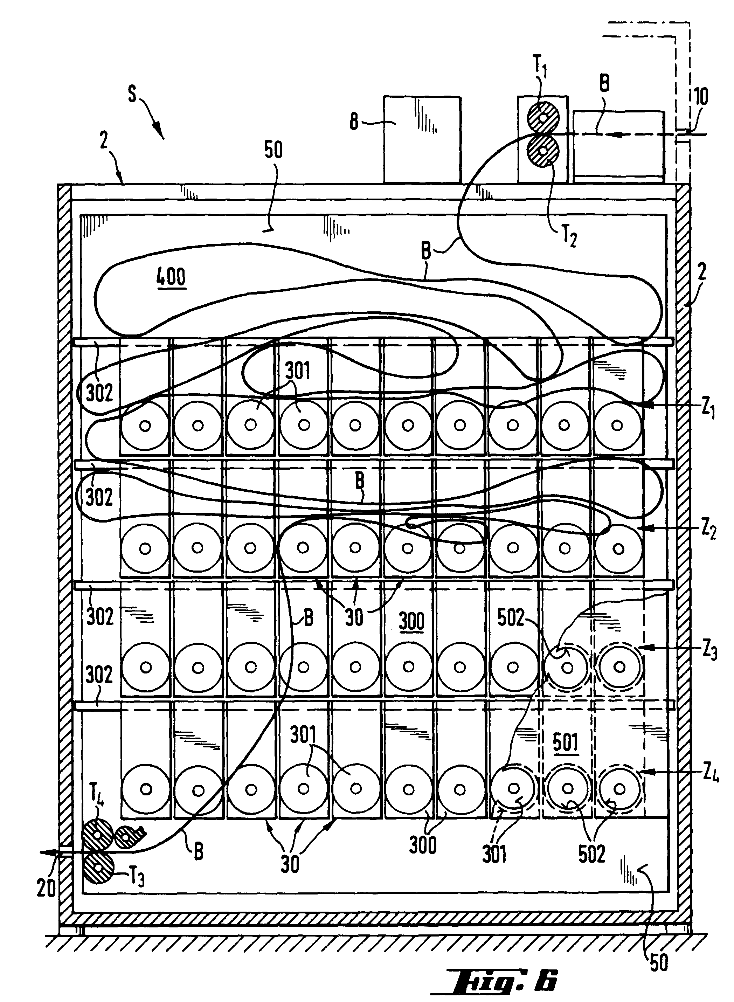

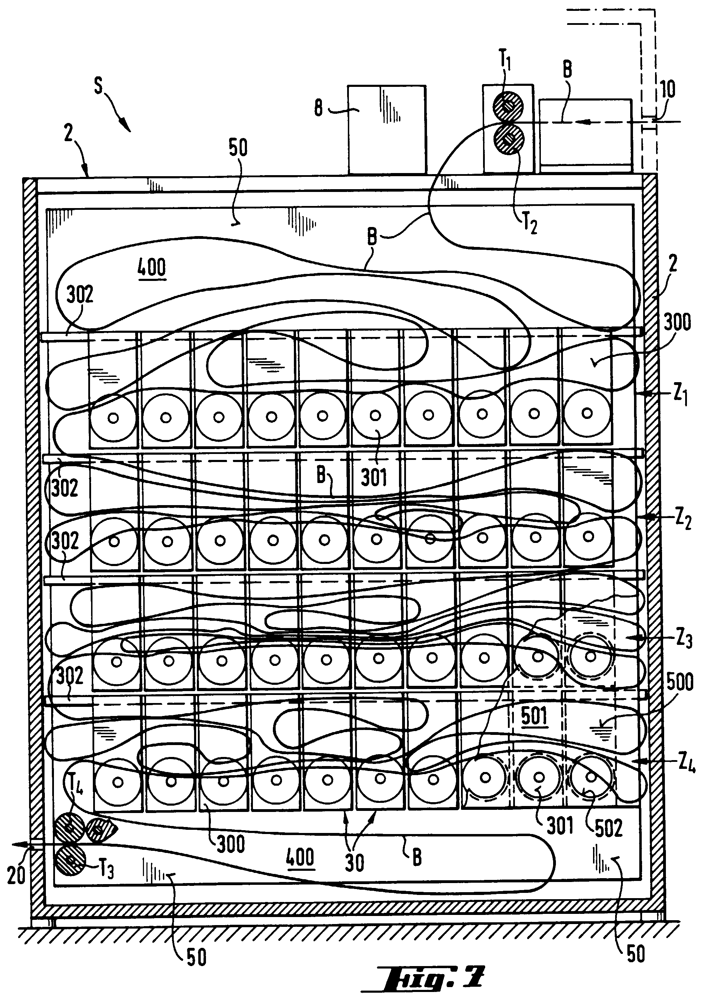

In Fig. 5 und den beiden nachfolgenden Figuren (Fig. 6 und Fig. 7) ist dargestellt, wie das Bandmaterial B im Speicherinnenraum 400 angesammelt wird. In diesen Figuren ist aus Gründen der besseren Übersichtlichkeit wieder auf die Darstellung des Gehäuseoberteils 1 sowie auf die Darstellung des Einfädelmechanismus 4 und der Kulissenplatte 501 verzichtet worden. Im hier beschriebenen Ausführungsbeispiel sind die Halteelemente 30 längs vier in der Gebrauchslage waagerecht verlaufenden Zeilen Z₁-Z₄ angeordnet. Diese Zeilen von Halteelementen 30 definieren die einzelnen Halteniveaus, auf denen das Bandmaterial B angesammelt wird. Wie aus Fig. 5 zu erkennen ist, sammeln die Halteelemente 30 der obersten Zeile zunächst das Bandmaterial B in Form von Schlaufen oberhalb dieser Zeile an, bis das Gewicht des angesammelten Bandmaterials den Schwellenwert überschreitet und die Halteelemente 30 gegen die Federkraft der Trägerplatten 300 so weit zurückgedrückt werden, dass Bandmaterial nach unten hin freigegeben wird.

Der daraus resultierende "Zustand" des Speicherinnenraums 400 ist aus Fig. 6 zu erkennen. Der Schwellenwert des obersten Halteniveaus ist hier bereits überschritten worden, so dass Bandmaterial B auf das darunterliegende Niveau freigegeben wurde und die Halteelemente 30 der zweitobersten Zeile nun ebenfalls vom darüberliegenden Niveau nach unten hin freigegebenes Bandmaterial ansammeln, bis der Schwellenwert überschritten wird. Ist durch das Freigeben von Bandmaterial auf das darunterliegende zweitoberste Niveau der Schwellenwert für das oberste Niveau wieder unterschritten, so wird das in den Speicher eintretende Bandmaterial dort wieder solange angesammelt, bis der Schwellenwert erneut überschritten wird, wodurch erneut Bandmaterial auf das zweitoberste Niveau gelangt.

In der gleichen Weise gibt auch das zweitoberste Niveau Bandmaterial auf das darunterliegende drittoberste Niveau, also auf die drittoberste Zeile von Halteelementen 30, frei, sobald der Schwellenwert des zweitobersten Niveaus überschritten wird. Gleiches gilt für das Freigeben von Bandmaterial vom drittobersten zum darunterliegenden viertobersten Niveau.

Ein auf allen vier Niveaus befüllter Speicher S ist in Fig. 7 dargestellt, aus Gründen der besseren Übersichtlichkeit in der bisher üblichen "abgespeckten" Art und Weise, d.h. ohne das Gehäuseoberteil 1 etc.. Man erkennt, dass der Schwellenwert des viertobersten und damit des untersten Halteniveaus so eingestellt ist, dass sich unterhalb dieses Niveaus nur noch eine Schlaufe des Bandmaterials B befindet Dadurch werden beispielsweise bei Fotopapier als Bandmaterial ungewollte Druckbelichtungen des Fotopapiers vermieden, die entstehen können, wenn das Fotopapier, das aus dem Auslass 20 des Speichers herausgezogen wird, unter einer grösseren Papieransammlung herausgezogen werden muss, die mit ihrem Gewicht auf dem Papier aufliegt, das gerade herausgezogen wird. Ausserdem ist auf diese Weise auch stets ein sicheres Herausziehen von Bandmaterial aus dem Speicherinnenraum 400 gewährleistet.

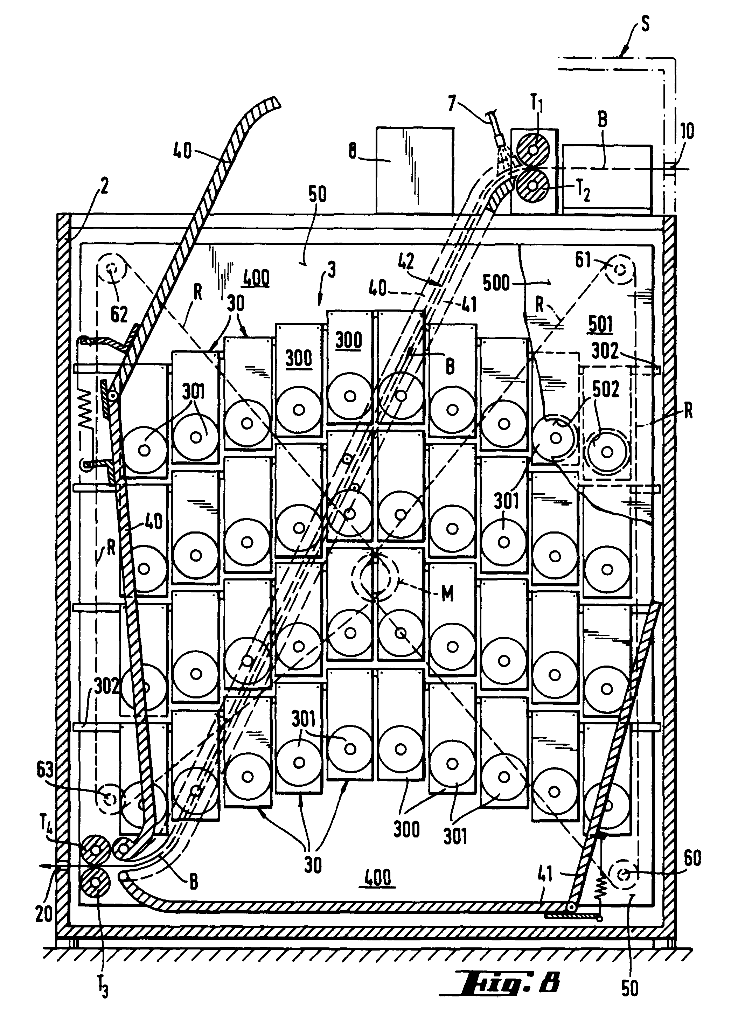

Ein weiteres Ausführungsbeispiel des erfindungsgemässen Speichers S ist in Fig. 8 dargestellt. In diesem Ausführungsbeispiel sind die Halteelemente 30, die die Halteniveaus definieren, vom einen Zeilenende beginnend zur Zeilenmitte hin ansteigend und anschliessend zum anderen Zeilenende hin wieder abfallend angeordnet. Dadurch kann erreicht werden, dass sich das Bandmaterial längs einer einzelnen Zeile betrachtet in gleichmässigerer Dichte ansammelt als im bisher erläuterten Ausführungsbeispiel. Es sammelt sich nämlich in der Zeilenmitte das Bandmaterial dichter aufeinanderliegend an als an den Zeilenenden, wo sich "luftigere" Schlaufen bilden. Selbstverständlich kann diese längs einer Zeile betrachtete unterschiedliche Dichte des Bandmaterials aber auch durch eine entsprechende Veränderung der Vorspannung der Halteelemente 30 kompensiert werden, die in der Zeilenmitte angeordnet sind. Wie bereits erläutert, kann dies mittels der Abstandshalter 302 erfolgen.

Weiterhin kann der beschriebene Speicher S noch Ableiteinrichtungen für elektrische Ladungen umfassen, die beispielsweise durch Reibung des Bandmaterials im Kontakt mit den Transportrollen T₁ bis T₄ entstehen können. Diese können sowohl am Einlass und am Auslass des Speichers vorgesehen sein. In Fig. list eine solche Ableiteinrichtung 7 als Ionisationseinrichtung aus Gründen der besseren Übersichtlichkeit nur am Einlass 10 schematisch angedeutet. Diese Ableiteinrichtung 7 kann beispielsweise so ausgebildet sein, dass sie die Luft zwischen ihr und dem Bandmaterial B ionisiert und damit leitend macht und so die Ladungen zu einer ebenfalls an der Ableiteinrichtung 7 vorgesehenen Ladungssenke (z.B. geerdetes Metallplättchen) abfliessen können. Dadurch wird verhindert, dass es auf dem Bandmaterial (z.B. Fotopapier) zu Entladungen und damit unter Umständen zu ungewollten Belichtungen kommen kann.

Ausserdem kann auch ein Füllstandsanzeiger 8 vorgesehen sein, der beim Erreichen eines gewissen Füllstands ein entsprechendes Signal erzeugt, welches ermöglicht, rechtzeitig geeignete Massnahmen zu ergreifen, bevor der Speicher vollgelaufen ist, z.B. einen weiteren Speicher S zwischenzuschalten oder Aehnliches.

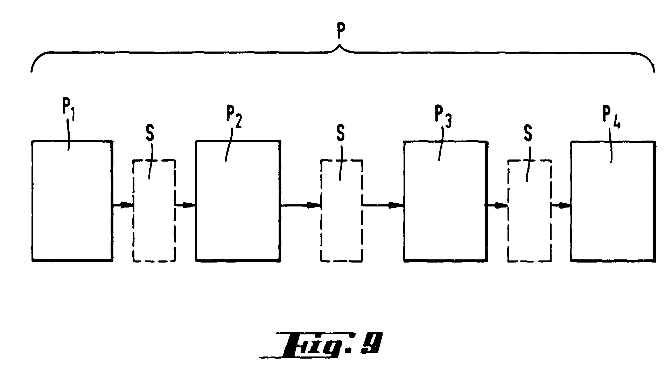

Besonders geeignet ist ein solcher Speicher S für den Einsatz in einer Anlage zur Bearbeitung von Bandmaterial und hier insbesondere zum Einsatz in einer fotografischen Verarbeitungsstrecke P, wie sie in Fig. 9 in einem Blockschaltbild dargestellt ist Sie umfasst mehrere einzelne Bearbeitungsstationen. In einer Filmentwicklungsstation P₁ werden zunächst die Positiv- oder Negativfilme entwickelt Daran anschliessend werden in einer Kopierstation P₂ die Positiv- oder Negativfilme auf eine lichtempfindliche Papierbahn aufkopiert, welche dann in einer Papierentwicklungsstation P₃ entwickelt wird. In einer daran anschliessenden Endverarbeitungsstation P₄ werden die zu einem Kopierauftrag gehörenden Bestandteile schliesslich zusammengestellt, bevor sie an den Auftraggeber retourniert werden. Zwischen die einzelnen Bearbeitungsstationen können Speicher S geschaltet sein, wie in der Einleitung bereits angesprochen und in Fig. 9 strichliert angedeutet Zumindest aber zwischen die Kopierstation P₂ und die Papierentwicklungsstation P₃ ist ein Speicher S geschaltet, der in vorteilhafter Weise so ausgebildet ist wie oben anhand der Figuren beschrieben. Ein solcher Speicher S ist vom Aufwand her betrachtet verhältnismässig einfach, was insbesondere von der Kostenseite her sehr günstig ist Weiterhin müssen keinerlei "Blindbänder" wie sie eingangs erwähnt wurden, durch den Speicher S laufen, da der Einfädelvorgang denkbar einfach und gleichermassen schnell und sicher durchgeführt werden kann. Ein sehr gewichtiger Vorteil ist auch der sehr geringe Platzbedarf des erfindungsgemässen Speichers S gegenüber bekannten Speichern bei gleichzeitig hoher Aufnahmekapazität, was im Zuge immer platzsparenderer Verarbeitungsstrecken besonders vorteilhaft ist Selbstverständlich ist der vorstehend beschriebene Speicher S auch zum Speichern von Filmmaterial geeignet.

## Patentansprüche

1. Speicher (S) für Bandmaterial (B), insbesondere für belichtetes fotografisches Kopiermaterial, mit einem Gehäuse, einem Einlass (10) für das Bandmaterial in den Gehäuseinnenraum und einem Auslass (20) für das Bandmaterial (B) aus dem Innenraum (400) des Speichers, bei welchem Speicher im Gehäuseinnenraum Haltemittel (3) vorgesehen sind, die das in den Innenraum des Gehäuses gelangte Bandmaterial (B) oberhalb dieser Haltemittel ansammeln, solange das Gewicht des in den Innenraum gelangten Bandmaterials kleiner ist als ein Schwellenwert, und die das Bandmaterial nach unten hin freigeben, wenn das Gewicht des oberhalb der Haltemittel (3) angesammelten Bandmaterials diesen Schwellenwert überschreitet, dadurch gekennzeichnet, dass die Haltemittel (3) so ausgebildet und angeordnet sind, dass sie mehrere in der Gebrauchslage untereinander liegende Niveaus definieren, auf denen sie das Bandmaterial (B) ansammeln, bis das Gewicht des Bandmaterials den Schwellenwert für das jeweilige Niveau überschreitet, dass sie dann Bandmaterial auf das darunterliegende Niveau freigeben, und dass die Haltemittel (3) des jeweiligen darunterliegenden Niveaus das vom darüberliegenden Niveau freigegebene Bandmaterial wieder bis zum Ueberschreiten des Schwellenwerts für das Gewicht ansammeln, und so weiter.

2. Speicher nach Anspruch 1, dadurch gekennzeichnet, dass beim untersten Halteniveau der Schwellenwert für das Gewicht des Bandmaterials so eingestellt ist, dass sich unterhalb dieses Niveaus im wesentlichen nur eine Längsbahn bzw. eine Schlaufe des Bandmaterials (B) befindet.

3. Speicher nach einem der Ansprüche 1 oder 2, dadurch gekennzeichnet, dass die Haltemittel (3) mehrere in der Gebrauchslage im wesentlichen waagerecht angeordnete Zeilen (Z₁-Z₄) von Halteelementen (30) umfassen, die die Halteniveaus definieren.

4. Speicher nach einem der Ansprüche 1 oder 2, dadurch gekennzeichnet, dass die Haltemittel (3) mehrere in Zeilen angeordnete und in der Gebrauchslage vom einen Zeilenende bis zur Zeilenmitte hin ansteigend angeordnete und anschliessend zum anderen Zeilenende hin wieder abfallend angeordnete Halteelemente (30) umfassen, die die Halte niveaus definieren.

5. Speicher nach einem der Ansprüche 1 bis 4, dadurch gekennzeichnet, dass die Haltemittel (3) federnd gelagerte Halteelemente (30) umfassen, die die Seitenkanten des Bandmaterials (B) tragen und es oberhalb der Halteelemente (30) ansammeln, solange das Gewicht des Bandmaterials kleiner ist als der Schwellenwert, und dass die Halteelemente (30) gegen die Federkraft seitlich so weit zurückdrückbar sind, dass sie beim Ueberschreiten des Schwellenwerts Bandmaterial nach unten hin freigeben.

6. Speicher nach Anspruch 5, dadurch gekennzeichnet, dass die Halteelemente (30) jeweils eine blattfederartige biegsame Trägerplatte (300) umfassen, an der ein Haltepilz (301) zum Tragen des Bandmaterials (B) vorgesehen ist.

7. Speicher nach Anspruch 6, dadurch gekennzeichnet, dass der Kopf (303) des Haltepilzes als Kugelkalotte ausgebildet ist, wobei der Kugelradius im Bereich von etwa 5 mm bis etwa 150 mm, vorzugsweise im Bereich von etwa 50 mm bis etwa 100 mm liegt.

8. Speicher nach einem der Ansprüche 6 oder 7, dadurch gekennzeichnet, dass ein Anschlag (304) für die biegsame Trägerplatte (300) vorgesehen ist, gegen den das eine Ende der Trägerplatte federnd anliegt, und dass am anderen Ende zwischen der Trägerplatte (300) und ihrer Befestigung ein Abstandshalter (302) zum Einstellen der Vorspannung der Trägerplatte (300) vorgesehen ist.

9. Speicher nach einem der Ansprüche 1 bis 8, dadurch gekennzeichnet, dass die Haltemittel Begrenzungseinrichtungen (5,50,51) umfassen, die zwei im wesentlichen ebene Flächen (500, 510) beschreiben, welche sich etwa parallel zu den Seitenwänden des Gehäuses erstrecken und die effektive Breite (C) des Speicherinnenraums (400) festlegen, in den das Bandmaterial eintritt, dass an einer der Begrenzungseinrichtungen (50) Halteelemente (30) zum Ansammeln des eingetretenen Bandmaterials vorgesehen sind, und dass die Begrenzungseinrichtungen (50,51) aufeinander zu oder voneinander weg bewegbar sind.

10. Speicher nach Anspruch 6 und Anspruch 9, dadurch gekennzeichnet, dass eine der Begrenzungseinrichtungen (50) einen Rahmen umfasst, der im wesentlichen parallel zur Bewegungsrichtung des eintretenden Bandmaterials (B) angeordnete Verstrebungen aufweist, an denen die biegsamen Trägerplatten (300), die die Haltepilze (301) tragen, befestigt sind.

11. Speicher nach einem der Ansprüche 9 oder 10, dadurch gekennzeichnet, dass die Begrenzungseinrichtungen (50,501,51) gemeinsam und symmetrisch zu einer Referenzebene (I-I) bewegbar sind, welche sich senkrecht zur Ebene des eintretenden Bandmaterials und parallel zu dessen Seitenkanten vom Einlass zum Auslass hin erstreckt.

12. Speicher nach Anspruch 11, dadurch gekennzeichnet, dass zum Bewegen der Begrenzungseinrichtungen mindestens eine motorisch antreibbare Schraubenspindel (60) vorgesehen ist, welche von ihrer Längsmitte aus betrachtet zum einen Spindelende hin mit einem Rechtsgewinde (601) und zum anderen Spindelende hin mit einem Linksgewinde (600) von etwa gleicher Gewindesteilheit versehen ist, und dass diese Schraubenspindel (60) in eine in der jeweiligen Begrenzungseinrichtung vorgesehene Gewindebohrung eingreift.

13. Speicher nach einem der Ansprüche 1 bis 12, dadurch gekennzeichnet, dass er mit einem Einfädelmechanismus (4) für das Bandmaterial versehen ist, welcher beim Einfädeln des Bandmaterials einen Kanal vom Einlass (10) in den Speicherinnenraum (400) zum Auslass (20) aus dem Speicherinnenraum (400) definiert.

14. Speicher nach Anspruch 13, dadurch gekennzeichnet, dass der Einfädelmechanismus (4) schwenkbare Leitbleche (40,41) umfasst, die im eingeschwenkten Zustand den Kanal (42) vom Einlass (10) in den Speicherinnenraum zum Auslass (20) aus dem Speicherinnenraum definieren.

15. Speicher nach Anspruch 14, dadurch gekennzeichnet, dass am Einlass (10) und am Auslass (20) jeweils ein Sensor vorgesehen ist, und dass beim Einfädelvorgang des Bandmaterials der Sensor am Einlass (10) beim Detektieren von eintretendem Bandmaterial ein Signal zum Einschwenken der Leitbleche (40,41) an einen Antrieb zum Ein- und Ausschwenken der Leitbleche (40,41) gibt, und dass der Sensor am Auslass (20) beim Detektieren von austretendem Bandmaterial ein Signal zum Ausschwenken der Leitbleche (40,41) an den Antrieb gibt.

16. Speicher nach einem der Ansprüche 1 bis 15, dadurch gekennzeichnet, dass am Einlass (10) und am Auslass (20) eine Ableiteinrichtung (7) vorgesehen ist, welche auf dem Bandmaterial befindliche elektrische Ladungen ableitet.

17. Speicher nach einem der Ansprüche 1 bis 16, dadurch gekennzeichnet, dass ein Füllstandsanzeiger (8) vorgesehen ist, der die Zufuhr von Bandmaterial in den Innenraum (400) des Speichers stoppt, wenn die im Innenraum (400) befindliche Menge an Bandmaterial einen Schwellenwert überschreitet.

18. Anlage zur Bearbeitung von Bandmaterial, mit mindestens zwei Bearbeitungsstationen, und mit einem zwischen die Bearbeitungsstationen geschalteten Speicher (S) für das Bandmaterial, dadurch gekennzeichnet, dass der Speicher (S) für das Bandmaterial nach einem der Ansprüche 1 bis 17 ausgebildet ist

19. Fotografische Verarbeitungsstrecke (P), mit einer Filmentwicklungsstation (P₁) zur Entwicklung von Positiv- oder Negativfilmen, mit einer Kopierstation (P₂) zum Kopieren der Positiv- oder Negativfilme auf eine lichtempfindliche fotografische Papierbahn, mit einer Papierentwicklungsstation (P₃) zur Entwicklung der belichteten Papierbahn und mit einer Endverarbeitungsstation (P₄) zum Zusammenstellen der zu einem Kopierauftrag gehörenden Bestandteile, sowie mit einem Zwischenspeicher zwischen der Kopierstation (P₂) und der Papierentwicklungsstation (P₃), dadurch gekennzeichnet, dass der Zwischenspeicher für die belichtete Papierbahn zwischen Kopierstation (P₂) und Papierentwicklungsstation (P₃) als Speicher nach einem der Ansprüche 1 bis 17 ausgebildet ist.

## Claims

1. A storage means (S) for strip material (B), especially for exposed photographic copy material, comprising a housing, an inlet (10) through which the strip material enters the interior of the housing and an outlet (20) through which the strip material (B) leaves the interior (400) of the storage means, in which storage means there are provided, in the interior of the housing, holding means (3) that accumulate above those holding means the strip material (B) that has entered into the interior of the housing as long as the weight of the strip material that has passed into the interior is below a threshold value, and that release the strip material in a downward direction when the weight of the strip material accumulated above the holding means (3) exceeds that threshold value, wherein the holding means (3) are so constructed and arranged that they define several levels, one below another in the operating position, on which they accumulate the strip material (B) until the weight of the strip material exceeds the threshold value for the level in question, wherein the holding means (3) then release the strip material to the level lying below, and wherein the holding means (3) of the respective level below accumulate the strip material released from the level above, again until the threshold value for the weight is exceeded, and so on.

2. A storage means according to claim 1, wherein at the lowest holding level the threshold value for the weight of the strip material is so set that essentially only one longitudinal web or one loop of the strip material (B) is located below that level.

3. A storage means according to either claim 1 or claim 2, wherein the holding means (3) comprise several rows (Z₁-Z₄) of holding elements (30), arranged essentially horizontally in the operating position, which define the holding levels.

4. A storage means according to either claim 1 or claim 2, wherein the holding means (3) comprise several holding elements (30) which are arranged in rows and, in the operating position, are arranged ascending from one end of the row towards the centre of the row and subsequently descending again towards the other end of the row, the holding elements defining the holding levels.

5. A storage means according to any one of claims 1 to 4, wherein the holding means (3) comprise resiliently mounted holding elements (30) which support the lateral edges of the strip material (B) and which accumulate the strip material above the holding elements (30) as long as the weight of the strip material is below the threshold value, and wherein the holding elements (30) can be pressed laterally so far back against the resilient force that, when the threshold value is exceeded, they release the strip material in a downward direction.

6. A storage means according to claim 5, wherein each of the holding elements (30) comprises a flat spring-like flexible support plate (300) on which a holding mushroom (301) is mounted for supporting the strip material (B).

7. A storage means according to claim 6, wherein the head (303) of the holding mushroom is in the form of a spherical cap having a radius in the range of from about 5 mm to about 150 mm, preferably in the range of from about 50 mm to about 100 mm.

8. A storage means according to either claim 6 or claim 7, wherein a stop (304) for the flexible support plate (300) is provided against which one end of the support plate abuts in a resilient manner, and wherein there is provided at the other end of the support plate (300), between the support plate (300) and its mounting, a spacer (302) for setting the biasing of the support plate (300).

9. A storage means according to any one of claims 1 to 8, wherein the holding means comprise limiting devices (5, 50, 51) which define two essentially planar faces (500, 510) that extend approximately parallel to the lateral walls of the housing and determine the effective width (C) of the internal space (400) of the storage means into which the strip material enters, wherein there are provided on one of the limiting devices (50) holding elements (30) for accumulating the strip material that has entered, and wherein the limiting devices (50, 51) are movable towards or away from each other.

10. A storage means according to claim 6 and claim 9, wherein one of the limiting devices (50) comprises a frame that has cross-struts arranged essentially parallel to the direction of movement of the entering strip material (B), the flexible support plates (300) carrying the holding mushrooms (301) being fastened to those cross-struts.

11. A storage means according to either claim 9 or claim 10, wherein the limiting devices (50, 501, 51) are movable together and symmetrically relative to a reference plane (I-I) that extends from the inlet to the outlet perpendicularly to the plane of the entering strip material and parallel to the lateral edges of the entering strip material.

12. A storage means according to claim 11, wherein there is provided for moving the limiting devices at least one motor-driven threaded spindle (60) that, viewed from the centre of its length towards one spindle end, is provided with a right-hand thread (601), and viewed from the centre of its length towards the other spindle end is provided with a left-hand thread (600) of roughly identical thread pitch, and wherein that threaded spindle (60) engages in a threaded bore provided in each of the limiting devices.

13. A storage means according to any one of claims 1 to 12, wherein it is provided with a threading mechanism (4) for the strip material which, when the strip material is being threaded in, defines a channel from the inlet (10) of the interior (400) of the storage means to the outlet (20) of the interior (400) of the storage means.

14. A storage means according to claim 13, wherein the threading mechanism (4) comprises pivotable guide plates (40, 41) which, in a pivoted-in position, define the channel (42) from the inlet (10) of the interior of the storage means to the outlet (20) of the interior of the storage means.

15. A storage means according to claim 14, wherein a sensor is provided at the inlet (10) and at the outlet (20) and wherein, when the strip material is being threaded in, the sensor at the inlet (10) on detecting entering strip material emits, to a drive for pivoting the guide plates (40, 41) inwards and outwards, a signal to pivot the guide plates (40, 41) inwards, and wherein, on detecting exiting strip material, the sensor at the outlet (20) emits a signal to the drive to pivot the guide plates (40, 41) outwards.

16. A storage means according to any one of claims 1 to 15, wherein there is provided at the inlet (10) and at the outlet (20) a discharge device (7) which removes electrical charges from the strip material.

17. A storage means according to any one of claims 1 to 16, wherein a fill state indicator (8) is provided which discontinues the supply of strip material to the interior (400) of the storage means when the quantity of strip material located in the interior (400) exceeds a threshold value.

18. An installation for processing strip material, having at least two processing stations and having, connected between the processing stations, a storage means (S) for storing the strip material, wherein the storage means (S) for the strip material is constructed in accordance with any one of claims 1 to 17.

19. A photographic processing line (P) comprising a film developing station (P₁) for developing positive or negative films, a copy station (P₂) for exposing the positive or negative films onto a photosensitive photographic paper strip, a paper developing station (P₃) for developing the exposed paper strip and a final processing station (P₄) for assembling the component parts belonging to a print order, and also an intermediate storage means between the copy station (P₂) and the paper developing station (P₃), wherein the intermediate storage means for storing the exposed paper strip between the copy station (P₂) and the paper developing station (P₃) is constructed in the form of a storage means according to any one of claims 1 to 17.

## Revendications

1. Magasin (S) pour matériau en bande (B), en particulier pour matériau pour tirage photographique, exposé, comportant une carrosserie, une entrée (10) dans l'espace intérieur de la carrosserie pour le matériau en bande et une sortie (20) hors de l'espace intérieur (400) du magasin pour le matériau en bande (B), magasin dans le cas duquel sont prévus, dans l'espace intérieur de la carrosserie, des moyens de soutien (3) qui accumulent le matériau en bande (B), parvenu dans l'espace intérieur de la carrosserie, au-dessus de ces moyens de soutien aussi longtemps que le poids du matériau en bande parvenu dans l'espace intérieur est inférieur à une valeur de seuil et qui libèrent vers le bas le matériau en bande lorsque le poids du matériau en bande accumulé au-dessus des moyens de soutien (3) dépasse cette valeur de seuil, caractérisé en ce que les moyens de soutien (3) sont conçus et disposés de façon à définir plusieurs niveaux qui se situent l'un en dessous de l'autre en position d'utilisation et sur lesquels ils accumulent le matériau en bande (B) jusqu'à ce que le poids du matériau en bande dépasse la valeur de seuil pour le niveau respectif, qui libèrent alors le matériau en bande sur le niveau situé par-dessous et que les moyens de soutien (3) du niveau respectivement situé par-dessous accumulent à nouveau le matériau en bande, libéré du niveau situé par-dessus, jusqu'à ce que le poids dépasse la valeur de seuil et ainsi de suite.

2. Magasin selon la revendication 1, caractérisé en ce que dans le cas du niveau de soutien le plus bas, on fixe la valeur de seuil pour le poids du matériau en bande de façon qu'en dessous de ce niveau ne se trouve sensiblement qu'un ruban longitudinal ou une boucle de matériau en bande (B).

3. Magasin selon l'une des revendications 1 ou 2, caractérisé en ce que les moyens de soutien (3) comportent plusieurs lignes (Z₁-Z₄) d'éléments de soutien (30) qui sont disposées sensiblement horizontalement en position d'utilisation et définissent les niveaux de soutien.

4. Magasin selon l'une des revendications 1 ou 2, caractérisé en ce que les moyens de soutien (3) comportent plusieurs éléments de soutien (30) qui sont disposés sur des lignes et, en position d'utilisation, sont disposés en montant d'une extrémité de la ligne jusqu'au milieu de la ligne, sont ensuite disposés en descendant à nouveau jusqu'à l'autre extrémité de la ligne et définissent les niveaux de soutien.

5. Magasin selon l'une des revendications 1 à 4, caractérisé en ce que les moyens de soutien (3) comportent des éléments de soutien (30) qui sont portés élastiquement, qui portent les bords latéraux du matériau en bande (B) et l'accumulent au-dessus des éléments de soutien (30), aussi longtemps que le poids du matériau en bande est inférieur à la valeur de seuil, et que les éléments de soutien (30) peuvent être repoussés latéralement, à l'encontre de la force élastique, suffisamment pour, lors du dépassement de la valeur de seuil, libérer vers le bas le matériau en bande.

6. Magasin selon la revendication 5, caractérisé en ce que les éléments de soutien (30) comportent chacun une plaque support flexible (300) du type ressort à lame sur laquelle est prévu un champignon de soutien (301) pour porter le matériau en bande (B).

7. Magasin selon la revendication 6, caractérisé en ce que la tête (303) du champignon de soutien a la forme d'une calotte sphérique, le rayon de la sphère se situant sur la plage allant d'environ 5 mm à environ 150 mm, de préférence sur la plage allant d'environ 50 mm à environ 100 mm.

8. Magasin selon l'une des revendications 6 à 7, caractérisé en ce que, pour la plaque support flexible (300), est prévue une butée (304) contre laquelle s'appuie élastiquement la première extrémité de la plaque support et qu'à l'autre extrémité, entre la plaque support (300) et sa fixation, est prévu un écarteur (302) pour prescrire la précontrainte de la plaque support (300).

9. Magasin selon l'une des revendications 1 à 8, caractérisé en ce que les moyens de soutien comportent des dispositifs de limitation (5,50,51) qui décrivent deux surfaces sensiblement planes (500, 510) qui s'étendent à peu près parallèlement aux parois latérales de la carrosserie et définissent la largeur effective (C) de l'espace intérieur (400) du magasin dans lequel entre le matériau en bande, que sur l'un des dispositifs de limitation (50), des éléments de soutien (30) sont prévus pour accumuler le matériau en bande entré et que les dispositifs de limitation (50, 51) peuvent se déplacer en direction l'un de l'autre ou en direction opposée.

10. Magasin selon la revendication 6 ou la revendication 9, caractérisé en ce que l'un des dispositifs de limitation (50) comporte un cadre présentant des entretoises qui sont disposées sensiblement parallèlement à la direction du mouvement du matériau en bande entrant (B) et sur lesquelles sont fixées les plaques supports flexibles (300) qui portent les champignons de soutien (301).

11. Magasin selon l'une des revendications 9 ou 10, caractérisé en ce que les dispositifs de limitation (50,501,51) peuvent se déplacer, ensemble, symétriquement par rapport à un plan de référence (I-I) qui s'étend, de l'entrée à la sortie, perpendiculairement au plan du matériau en bande entrant et parallèlement à ses bords latéraux.

12. Magasin selon la revendication 11, caractérisé en ce que pour le déplacement des dispositifs de limitation est prévue au moins une tige filetée (60) qui peut être entraînée par un moteur et qui, vue depuis le milieu de sa longueur, est munie, en allant vers une extrémité de la tige, d'un filetage à droite (601), et en allant vers l'autre extrémité de la tige, d'un filetage à gauche (600) de pas à peu près identique, et que cette tige filetée (60) se visse dans un taraudage prévu dans le dispositif de limitation respectif.

13. Magasin selon l'une des revendications 1 à 12, caractérisé en ce qu'il est muni, pour le matériau en bande, d'un mécanisme d'enfilage (4) qui, lors de l'enfilage du matériau en bande, définit un canal de l'entrée (10) dans l'espace intérieur (400) du magasin à la sortie (20) hors de l'espace intérieur (400) du magasin.

14. Magasin selon la revendication 13, caractérisé en ce que le mécanisme d'enfilage (4) comporte des tôles de guidage pivotantes (40,41) qui, à l'état de basculement en fermeture, définissent le canal (42) de l'entrée (10) dans l'espace intérieur du magasin à la sortie (20) hors de l'espace intérieur du magasin.

15. Magasin selon la revendication 14, caractérisé en ce qu'à l'entrée (10) et à la sortie (20) est respectivement prévu un capteur et que, lors du processus d'enfilage du matériau en bande, le capteur situé à l'entrée (10), lorsqu'il détecte un matériau en bande entrant, envoie à un mécanisme de basculement des tôles de guidage (40,41) en fermeture et en ouverture, un signal de basculement des tôles de guidage (40,41) en fermeture et que le capteur situé à la sortie (20), lorsqu'il détecte un matériau en bande sortant, envoie au mécanisme un signal de pivotement des tôles de guidage (40,41) en ouverture.

16. Magasin selon l'une des revendications 1 à 15, caractérisé en ce qu'à l'entrée (10) et à la sortie (20) est prévu un dispositif de dérivation (7) qui dérive des charges électriques se trouvant sur le matériau en bande.

17. Magasin selon l'une des revendications 1 à 6, caractérisé en ce qu'est prévu un indicateur d'état de remplissage (8) qui arrête l'amenée du matériau en bande dans l'espace intérieur (400) du magasin lorsque la quantité de matériau en bande qui se trouve dans l'espace intérieur (400) dépasse une valeur de seuil.

18. Installation pour le traitement de matériau en bande, comportant au moins deux stations de traitement et comportant un magasin (S), monté entre les stations de traitement, pour le matériau en bande, caractérisée en ce que le magasin (S) pour le matériau en bande est conçu selon l'une des revendications 1 à 17.

19. Ligne de traitement photographique (P) comportant une station (P₁) de développement des films pour développer des films positifs ou négatifs, comportant une station de tirage (P₂) pour tirer des films positifs ou négatifs sur une bande de papier photographique sensible à la lumière, comportant une station (P₃) de développement du papier pour développer la bande de papier exposée et comportant une station de traitement final (P₄) pour grouper les constituants appartenant à une commande de tirage, ainsi qu'un magasin intermédiaire entre la station de tirage (P₂) et la station (P₃) de développement du papier, caractérisée en ce que le magasin intermédiaire pour la bande de papier exposée, entre la station de tirage (P₂) et la station (P₃) de développement du papier, est conçu sous forme d'un magasin selon l'une des revendications 1 à 17.
